# EUROPEAN PATENT APPLICATION

(11) **EP 2 151 417 A1**
(43) Date of publication of application: **10.02.2010**
(21) Application number: 07743805.9
(22) Date of filing: 21.05.2007
(51) Int. Cl.: C02F 9/00, C02F 1/04, C02F 1/78

(54) **WASTEWATER TREATMENT EQUIPMENT**

(71) Applicant: All China Environment Investments Limited, Tsim Sha Tsui East Kowloon, Hong Kong (CN)
(72) Inventor: MAYUZUMI, Kenji, Tsui East ,Kowloon , Hong Kong (CN)
(74) Representative: Goddar, Heinz J.
(86) International application number: PCT/JP2007/060371
(87) International publication number: WO 2008/142771

(57) **Abstract**

This wastewater treatment apparatus is provided with a wastewater tank for storing wastewater to be treated; a combustion pot for heating the wastewater supplied from the wastewater tank; a dust collector for collecting any dust generated in the combustion pot; a chiller for cooling the steam generated in the combustion pot; a gas-liquid separator for separating the steam cooled by the chiller into a liquid and a gas; and a liquid purifier for purifying the liquid separated from the gas by the gas-liquid separator. The liquid purifier generates ozone using a platinum catalyst and purifies the liquid with the ozone.

## Description

### TECHNICAL FIELD

The present invention relates to a wastewater treatment apparatus for treating wastewater discharged from medical facilities, factories, general households, shops, or public places where many people gather.

### BACKGROUND ART

The increasing awareness of environmental issues in recent years has led to an increased demand to properly treat wastewater discharged from medical facilities, factories, general households, shops, or public places where many people gather. This is because draining such wastewater to sewers without treatment of any kind causes not only an increased burden on public treatment facilities, but also the accumulation of contamination in sewers and the surrounding ground, which has an adverse effect on living conditions. For example, medical facilities and the like have conventionally treated wastewater used for medical treatment by draining it to a sewer after first purifying it through a treatment apparatus (see Patent Document 1 below).

Furthermore, since it is difficult to satisfy the latest environmental standards with conventional wastewater treatment equipment, ideas such as accumulating the wastewater in a storage facility without draining it to a sewer, having a specialist collect the sewage once a certain amount has accumulated, and treating it collectively at a specialized facility are under investigation. Patent Document 1: Japanese Unexamined Patent Application Publication H4-87678

### DISCLOSURE OF THE INVENTION

### PROBLEM TO BE SOLVED BY THE INVENTION

However, if a large quantity of wastewater is to be collected and treated at once, as described above, a large treatment facility capable of accommodating this quantity becomes necessary. In addition, dealings with administrative agencies may also become necessary. Moreover, it is quite possible that the construction of such a societal system for collecting wastewater may force the burden of treatment expenses onto the organizations or individuals who produce the wastewater.

The present invention was conceived in light of the circumstances described above, and its purpose is to provide a wastewater treatment apparatus capable of purifying wastewater discharged not only from medical facilities, but also from factories, general households, shops, and public places where many people gather, to a level that is not problematic even when released into a sewer.

### MEANS FOR SOLVING THE PROBLEM

The wastewater treatment apparatus of the present invention is provided with a wastewater tank for storing wastewater to be treated; a combustion pot for heating the wastewater supplied from the wastewater tank; a dust collector for collecting any dust generated in the combustion pot; a chiller for cooling the steam generated in the combustion pot; a gas-liquid separator for separating the steam cooled by the chiller into a liquid and a gas; and a liquid purifier for purifying the liquid separated from the gas by the gas-liquid separator. The liquid purifier generates ozone using a platinum catalyst and purifies the liquid with the ozone.

In the wastewater treatment apparatus of the present invention, the wastewater to be treated - in other words, unclean water discharged from a medical facility, factory, general household, shop, or public place where many people gather - is supplied to the combustion pot after it is temporarily stored in the wastewater tank. The wastewater supplied to the combustion pot is heated until the water evaporates. Any dust generated in the combustion pot during the heating process is collected by the dust collector. The steam generated in the combustion pot is supplied to the gas-liquid separator after it is cooled by the chiller. The steam supplied to the gas-liquid separator is separated into a liquid and a gas. The liquid separated from the gas by the gas-liquid separator is supplied to the liquid purifier, where it is purified by ozone gas generated using a platinum catalyst to a level that is not problematic even when released into a sewer.

The wastewater treatment apparatus of the present invention may also be provided with a secondary combustion device for combusting the gas separated from the liquid by the gas-liquid separator using the heat of the combustion pot.

In the wastewater treatment apparatus of the present invention, the gas separated from the liquid by the gas-liquid separator is secondarily combusted by the heat of the combustion pot, and the small quantities of residual odorous components in the gas are decomposed. Therefore, the gas does not have an odor after secondary combustion even when released into the atmosphere, so it does not give an unpleasant feeling to people in the vicinity of the apparatus.

The wastewater treatment apparatus of the present invention may also be provided with a water volume sensor for monitoring the water volume in the wastewater tank so that the wastewater in the tank is supplied to the combustion pot when it is determined by this water volume sensor that the water volume in the wastewater tank has reached a prescribed level.

In the wastewater treatment apparatus of the present invention, the wastewater in the wastewater tank is supplied to the combustion pot when the water volume of the wastewater tank reaches a prescribed level. Therefore, the wastewater in the wastewater tank never overflows, and the vicinity of the apparatus can be kept clean.

### EFFECT OF THE INVENTION

The wastewater treatment apparatus of the present invention enables the purification of wastewater discharged from medical facilities, factories, general households, shops, or public places where many people gather. Since the treated wastewater is purified to a level that is not problematic even when released into a sewer, the organizations or individuals who produce the wastewater can treat it on an individual basis.

### BRIEF DESCRIPTION OF THE DRAWINGS

[FIG. 1] FIG. 1 is a schematic view showing a first embodiment of the wastewater treatment apparatus of the present invention.
[FIG. 2] FIG. 2 is a schematic view showing a second embodiment of the wastewater treatment apparatus of the present invention.

1...wastewater tank, 2...combustion pot, 3...dust collector, 4...chiller system (chiller), 5...gas-liquid separator, 6...secondary combustion device, 7...liquid purifier, 7A...ozone generator, 7B, 7C, 7D...treatment tank, 10...flush toilet, 11...water storage tank

### BEST MODE FOR CARRYING OUT THE INVENTION

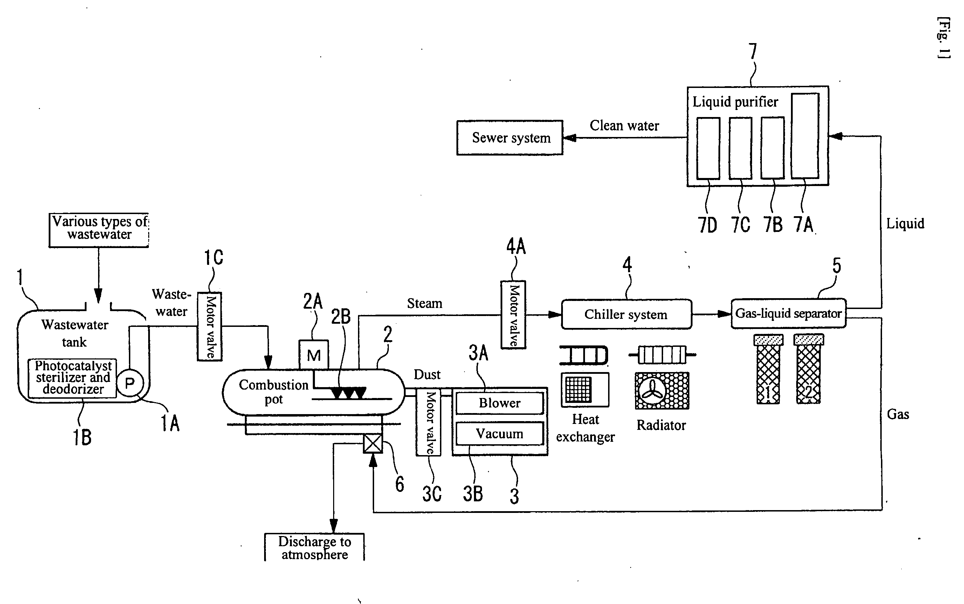

A first embodiment of the wastewater treatment apparatus of the present invention will be described in detail hereinafter with reference to FIG. 1.
The wastewater treatment apparatus of this embodiment is an apparatus for treating wastewater used for medical treatment at a medical facility. As shown in FIG. 1, this wastewater treatment apparatus is provided with a wastewater tank 1, a combustion pot 2, a dust collector 3, a chiller system 4, a gas-liquid separator 5, a secondary combustion device 6, and a liquid purifier 7.

The wastewater tank 1 is a piece of equipment for storing water used for medical treatment at a medical facility. A pump 1A for supplying the wastewater stored in the wastewater tank 1 to the combustion pot 2 and a photocatalyst deodorizer and sterilizer 1B for deodorizing and sterilizing the interior of the wastewater tank 1 are provided inside the wastewater tank 1. The photocatalyst deodorizer and sterilizer 1B is provided with a net coated with titanium dioxide and an ultraviolet lamp, and it is effective in sterilizing and deodorizing the liquid, the liquid surface, the inside walls of each device, and gases on the liquid surface. Two water level sensors - high level and low level sensors - are also provided inside the wastewater tank 1.

A motor valve 1C is provided in the water pipe arranged between the pump 1A and the combustion pot 2. The motor valve 1C operates in conjunction with the pump 1A to prevent the backflow of wastewater into the wastewater tank 1 and the oversupply of wastewater to the combustion pot 2.

The combustion pot 2 is a piece of equipment which heats the wastewater supplied from the wastewater tank 1 to the combustion pot 2 in order to sterilize and deodorize the wastewater and reduce organic matter. The combustion pot 2 comprises a combustion chamber for combusting the wastewater fed from the wastewater tank 1 and a heating chamber for heating the combustion chamber. Both the combustion chamber and the heating chamber have an airtight structure.

The combustion chamber is provided with a stirring mechanism 2A for uniformly heating the wastewater and keeping the odor generated from the wastewater in a constant state and a motor 2B for driving the stirring mechanism 2A. The heating chamber is provided with a heater for heating the combustion chamber and a temperature sensor for monitoring the temperature of the heater. The heating method of the combustion chamber is not limited to a heater, however, and a heating method based on the combustion of a gas (such as LPG) or an IH heating method may also be used.

The dust collector 3 is a piece of equipment which collects from the combustion chamber 2 substances that are separated as the wastewater is stirred and heated in the combustion chamber 2 (called "dust" hereafter). The dust collector 3 is provided with a blower 3A for blowing air into the combustion pot 2 and a vacuum device 3B for collecting any dust inside the combustion pot 2. A motor valve (or a motor ball valve) 3C is provided in the piping arranged between the combustion pot 2 and the dust collector 3. The motor valve 3C operates in conjunction with the dust collector 3 to prevent the backflow of dust into the combustion pot 2.

The chiller system 4 is a piece of equipment which cools the steam discharged from the combustion pot 2. The chiller system 4 is provided with a heat exchanger for collecting heat retained by the steam and a radiator for radiating the heat collected by the heat exchanger. A motor valve (or a motor ball valve) 4A is provided in the piping arranged between the combustion pot 2 and the chiller system 4. The motor valve 4A prevents the inflow of matter other than steam (for example, the air blown into the combustion pot 2 or any accompanying dust) into the chiller system 4.

The gas-liquid separator 5 is a piece of equipment which separates the steam introduced from the combustion pot 2 through the chiller system 4 into a liquid and a gas. A filter with a particle size of approximately 3 to 7 microns - preferably around 5 microns - is built into the gas-liquid separator 5. The gas separated from the liquid in the gas-liquid separator 5 is introduced into the secondary combustion device 6. On the other hand, the liquid separated from the gas in the gas-liquid separator 5 is introduced into the liquid purifier 7.

The secondary combustion device 6 is a piece of equipment which heats the gas separated from the liquid in the gas-liquid separator 5 and decomposes the odorous components contained in the gas. The secondary combustion device 6 operates using the combustion pot 2 as a heat source.

The liquid purifier 7 is a piece of equipment which purifies the liquid separated from the gas in the gas-liquid separator 5 using ozone gas. The liquid purifier 7 is provided with an ozone generator 7A for generating ozone gas using a platinum catalyst and three treatment tanks 7B, 7C and 7D for purifying the liquid based on the effect of the ozone supplied from the ozone generator 7A. The ozone generator 7A may use porous titanium with a platinum catalyst layer as a cathode and porous titanium with a lead dioxide layer as an anode, for example.

Next, the flow of the wastewater purification treatment by the wastewater treatment apparatus configured as described above will be explained.
Wastewater used for medical treatment is collected in the wastewater tank 1 from various places in a medical facility. The wastewater in this case is, for example, water spit out by patients after treatment or saliva aspirated from patients' mouths in the field of dentistry, blood or bodily fluids aspirated from patients' bodies during operations in the field of surgery, or fat aspirated from under the skin of patients in the field of cosmetic surgery.
The aforementioned wastewater gradually accumulates in the wastewater tank 1, and when the liquid level inside the wastewater tank 1 rises to the height of the higher water level sensor, the motor valve 1C is opened and the motor valves 3C and 4A are closed. The pump 1A also begins to operate, and the wastewater stored in the wastewater tank 1 is supplied to the combustion pot 2. When the liquid level inside the wastewater tank 1 drops to the height of the lower water sensor as the wastewater is supplied to the combustion pot 2, the pump 1A stops running. The two high and low water level sensors are installed at appropriate heights out of consideration of the treatment capacity of the combustion pot 2, and the volume of wastewater supplied to the combustion pot 2 during this time is the optimum amount of water that can be treated by the combustion pot 2.

Incidentally, the wastewater stored in the wastewater tank 1 sometimes contains foreign matter that is insoluble in water. When wastewater containing such foreign matter is aspirated by the pump 1A, there is a possibility that the pump 1A may become clogged and prevent the wastewater from being drained smoothly. In such cases, the clogging of the pump 1A is eliminated as follows. Basically, the load of the pump 1A increases when the pump 1A becomes clogged. Therefore, when the load of the pump 1A exceeds a prescribed level, the pump 1A temporarily reverses direction and the wastewater is fed from the combustion pot 2 toward the wastewater tank 1. As a result, the clogging of the pump 1A is eliminated. The pump 1A then returns to normal operation and feeds the wastewater from the wastewater tank 1 toward the combustion pot 2.

When a sufficient amount of wastewater has been supplied to the combustion pot 2, the motor valve 1C is closed and the motor valve 4A is opened. The pump 1A also stops running. The wastewater supplied to the combustion chamber of the combustion pot 2 is then stirred by the stirring mechanism 2A as it is heated by the heat of the heater. Through this process, the wastewater is sterilized and deodorized, and inorganic matter contained in the wastewater is reduced. After the steam generated in the combustion chamber of the combustion pot 2 due to the heating of the wastewater is cooled by the chiller system 4, it is supplied to the gas-liquid separator 5, where it is separated into a liquid and a gas.

The wastewater supplied to the combustion chamber of the combustion pot 2 is heated, and when the water has evaporated to the point that only dust remains in the combustion chamber, the motor valve 4A closes and the motor valve 3C is opened. The blower 3A then blows air into the combustion chamber, and the vacuum device 3B aspirates the air inside the combustion chamber. As a result, the dust remaining in the combustion chamber is collected into the dust collector 3. When the dust is collected, the blower 3A and the vacuum device 3B stop running and the motor valve 3C is closed. Moreover, since the motor 4A is closed while the blower 3A is in operation, matter other than steam is never introduced into the chiller system 4. The dust collected by the dust collector 3 is converted into recycled material for silica, for example, in a separate process.

The gas separated from the liquid by the gas-liquid separator 5 is supplied to the secondary combustion device 6, and the odorous components are decomposed as a result of secondary combustion by the heat of the combustion pot 2. The gas is released into the atmosphere after its odorous components are decomposed. On the other hand, the liquid separated from the gas by the gas-liquid separator 5 is supplied to the liquid purifier 7, where it is purified by ozone gas generated using a platinum catalyst. Specifically, the liquid is intensely sterilized and deodorized by the effect of the ozone in a process in which it successively flows through the three treatment tanks 7B, 7C and 7D, and organic matter in the liquid is also reduced. The purified liquid is channeled directly into an existing sewer system.

With the wastewater treatment apparatus of this embodiment, various types of wastewater from a medical facility can be purified to produce clean water that does not create a burden on the environment. The purified water can be channeled directly into an existing sewer system.

Although an apparatus for treating wastewater from a medical facility was described in this embodiment, the wastewater treatment apparatus of the present invention can also treat non-medical wastewater that is discharged from factories, general households, and shops.

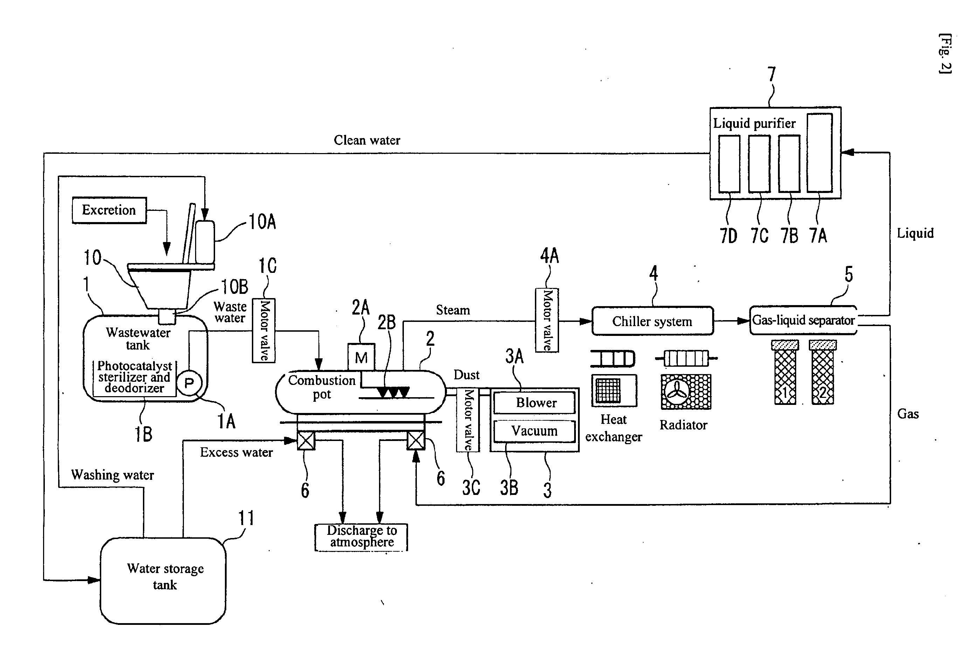

Next, a second embodiment of the wastewater treatment apparatus of the present invention will be described in detail with reference to FIG. 2. The constituent elements already described above in the first embodiment are labeled with the same symbols, and their descriptions are omitted here.
The wastewater treatment apparatus of this embodiment is an apparatus for treating the wastewater of a temporary lavatory installed in a place where many people gather such as a construction site, park, or campground. In addition to the main constituent elements already described above in the first embodiment, this wastewater treatment apparatus is provided with a flush toilet 10 and a water storage tank 11.

The flush toilet 10 is provided with an intermediate tank 10A for temporarily storing the washing water of the water storage tank 11 and an opening and closing valve 10B for opening and closing the discharge port of the flush toilet 10. When the flush lever of the intermediate tank 10A is operated, the opening and closing valve 10B operates in conjunction with this movement and opens the discharge port of the flush toilet 10. Excretion flows through the discharge port of the flush toilet 10 into the wastewater tank 1 together with the washing water. In this embodiment, the wastewater to be treated consists of a mixture of excretion and the washing water used to wash down the excretion, and the wastewater tank 1 is a piece of equipment for storing this wastewater.

The water storage tank 11 is a piece of equipment which stores the water purified by the liquid purifier 7 so it can be used as the washing water of the flush toilet 10. A water level sensor for detecting that the water storage tank 11 is full of water is provided inside the water storage tank 11.

Next, the flow of the treatment of excretion by the wastewater treatment apparatus configured as described above and the flow of recycling of the clean water that is treated will be described.
When a user using the flush toilet 10 operates the flush lever of the intermediate tank 10A to wash down excretion, the water in the intermediate tank 10A flows with great force toward the discharge port of the flush toilet 10. Simultaneously, the opening and closing valve 10B operates in conjunction with the flush lever to open the discharge port of the flush toilet 10. The excretion held temporarily in the flush toilet 10 is washed down toward the wastewater tank 1 with the force of the water supplied from the water storage tank 11.

The wastewater - in other words, the excretion and the washing water used to wash down the excretion - gradually accumulates in the wastewater tank 1, and when the liquid level inside the wastewater tank 1 rises to the height of the higher water level sensor, the motor valve 1C is opened and the motor valves 3C and 4A are closed. The pump 1A also begins to operate, and the wastewater stored in the wastewater tank 1 is supplied to the combustion pot 2. When the liquid level inside the wastewater tank 1 drops to the height of the lower water sensor as the wastewater is supplied to the combustion pot 2, the pump 1A stops running. The volume of wastewater supplied to the combustion pot 2 during this time is the optimum amount of water that can be treated by the combustion pot 2.

Incidentally, the wastewater stored in the wastewater tank 1 sometimes contains foreign matter such as underwear or feminine hygiene products. When wastewater containing such foreign matter is aspirated by the pump 1A, there is a possibility that the pump 1A may become clogged and prevent the wastewater from being drained smoothly. In such cases, the clogging of the pump 1A is eliminated by performing the same process as in the first embodiment described above.

When a sufficient amount of wastewater has been supplied to the combustion pot 2, the motor valve 1C is closed and the motor valve 4A is opened. The pump 1A also stops running. The wastewater supplied to the combustion chamber of the combustion pot 2 is then stirred by the stirring mechanism 2A as it is heated by the heat of the heater. Through this process, the wastewater is sterilized and deodorized, and inorganic matter contained in the wastewater is reduced. After the steam generated in the combustion chamber of the combustion pot 2 due to the heating of the wastewater is cooled by the chiller system 4, it is supplied to the gas-liquid separator 5, where it is separated into a liquid and a gas.

The wastewater supplied to the combustion chamber of the combustion pot 2 is heated, and when the water has evaporated to the point that the residual excretion is particulated, the motor valve 4A closes and the motor valve 3C is opened. The blower 3A then blows air into the combustion chamber, and the vacuum device 3B aspirates the air inside the combustion chamber. As a result, the dust remaining in the combustion chamber is collected into the dust collector 3. When the dust is collected, the blower 3A and the vacuum device 3B stop running and the motor valve 3C is closed. Moreover, since the motor 4A is closed while the blower 3A in the dust collector 3 is in operation, matter other than steam is never introduced into the chiller system 4. The dust collected by the dust collector 3 is converted into recycled material for silica, for example, in a separate process.

The gas separated from the liquid by the gas-liquid separator 5 is supplied to the secondary combustion device 6, and the odorous components are decomposed as a result of secondary combustion by the heat of the combustion pot 2. The gas is released into the atmosphere after its odorous components are decomposed. On the other hand, the liquid separated from the gas by the gas-liquid separator 5 is supplied to the liquid purifier 7, where it is purified by ozone gas generated using a platinum catalyst. Specifically, the liquid is intensely sterilized and deodorized by the effect of the ozone in a process in which it successively flows through the three treatment tanks 7B, 7C and 7D, and organic matter in the liquid is also reduced. The purified liquid is supplied to the water storage tank 11 and reused as the washing water of the flush toilet 10.

Incidentally, since the liquid contained in the excretion is treated and is pumped into the water storage tank 11 so that it can be used as the washing water of the flush toilet 10 in this embodiment, once water is supplied to the water storage tank 11 at the time of the installation of the temporary lavatory, there is never the problem of insufficient washing water in the future due to the use of the temporary lavatory. Conversely, however, cases in which the water in the water storage tank 11 overflows are also envisioned. Therefore, when the water storage tank 11 is full of water - in other words, when the water surface in the water storage tank reaches the height of the water level sensor - the excess clean water inside the water storage tank 11 is supplied to the secondary combustion device 6, where it is vaporized by heating and released into the atmosphere. Consequentially, water never overflows from the water storage tank 11.

The wastewater treatment apparatus of this embodiment resolves problems related to the treatment of excretion by reducing the amount of residual excretion discharged from a temporary lavatory and is able to prevent the diffusion of odor inside and around the temporary lavatory. Moreover, since the washing water of the temporary lavatory is reproduced from excretion, the amount of water used can be dramatically reduced.

Although an apparatus for treating the wastewater of a temporary lavatory installed in a place where many people gather such as a construction site, park, or campground was described in this embodiment, the wastewater treatment apparatus of the present invention can also treat wastewater that is discharged from portable or stationary toilets used outdoors or in ships, airplanes and railroad cars in addition to wastewater from a temporary lavatory such as that described above.

Embodiments of the present invention were described above in detail with reference to the drawings, but the specific configuration of the invention is not limited to these embodiments, and it includes design changes and the like within a scope that does not deviate from the gist of the invention.

### INDUSTRIAL APPLICABILITY

The present invention relates to a wastewater treatment apparatus provided with a wastewater tank for storing wastewater to be treated; a combustion pot for heating the wastewater supplied from the wastewater tank; a dust collector for collecting any dust generated in the combustion pot; a chiller for cooling the steam generated in the combustion pot; a gas-liquid separator for separating the steam cooled by the chiller into a liquid and a gas; and a liquid purifier for purifying the liquid separated from the gas by the gas-liquid separator, wherein the liquid purifier generates ozone using a platinum catalyst and purifies the liquid with the ozone.
With the wastewater treatment apparatus of the present invention, wastewater discharged from medical facilities, factories, general households, shops, or public places where many people gather can be purified to a level that is not problematic even when released into a sewer.

## Claims

1. A wastewater treatment apparatus provided with:
a wastewater tank for storing wastewater to be treated;
a combustion pot for heating said wastewater supplied from said wastewater tank;
a dust collector for collecting any dust generated in said combustion pot;
a chiller for cooling the steam generated in said combustion pot;
a gas-liquid separator for separating the steam cooled by said chiller into a liquid and a gas; and
a liquid purifier for purifying the liquid separated from the gas by said gas-liquid separator;
wherein said liquid purifier generates ozone using a platinum catalyst and purifies said liquid with the ozone.

2. A wastewater treatment apparatus according to claim 1, provided with a secondary combustion chamber for combusting the gas separated from the liquid by said gas-liquid separator using the heat of said combustion pot.

3. A wastewater treatment apparatus according to claim 1 or 2, wherein a water volume sensor for monitoring the water volume is provided in said tank; and
the wastewater in said tank is supplied to said combustion pot when it is determined by said water volume sensor that the water volume in said tank has reached a prescribed level.
